# EUROPEAN PATENT SPECIFICATION

(11) **EP 2 234 349 B1**
(45) Date of publication and mention of the grant of the patent: **08.05.2019**
(21) Application number: 09156526.7
(22) Date of filing: 27.03.2009
(51) Int. Cl.: H04L 12/58

(54) **System and method for detecting email content containment**
System und Verfahren zur Detektion von Eingrenzungen von E-Mail-Inhalten
Système et procédé pour la détection du confinement de contenu de courrier électronique

(43) Date of publication of application: 29.09.2010
(73) Proprietor: Symantec Corporation, Cupertino CA 95014 (US)
(72) Inventor: Bunker, Guy Barry Owen, Farnham Common, Buckinghamshire SL2 3LB (GB); Ngan, Tsuen Wan, Los Angeles, 90034 (GB)
(74) Representative: D Young & Co LLP

(56) References cited:
- GB-A- 2 400 933
- US-A1- 2004 064 737
- US-A1- 2005 086 520
- US-A1- 2006 101 014
- US-A1- 2008 059 590
- "Bloom Filter - Wikipedia, the free encyclopedia" 31 July 2009 (2009-07-31), XP002539588 Retrieved from the Internet: URL:http://en.wikipedia.org/wiki/Bloom_fil ter> [retrieved on 2009-07-31]

## Description

### Field

This invention relates to email systems, and more particularly, but not exclusively, to the detection of content containment within email documents.

### Background

Frequently, it is desired to efficiently find similar emails located in a database. For example, in litigation e-discovery situations, extensive databases of emails must be searched to decide whether emails are important to a legal case. Searching through an extensive database and comparing emails to determine potentially similar ones can be a problematic and tedious process. One approach for comparing emails for similarity is to compute a hash value from the content of differing emails and then compare the hash values for equality. Unfortunately, such approaches would typically only identify emails that are exact duplicates, since any differences in the emails would typically result in the generation of different hash values. Another possible approach is to compare every word of an email against the words of another to determine similarity. However, such an approach is typically very computationally intensive.

Often, emails may be near duplicates because an email is forwarded or replied to without much added text. When an initial email is repetitively replied to and/or forwarded, it may be desirable to find only the last email in the chain, since the last email often contains all of the content of the preceding emails. Thus, in e-discovery situations, it may be more desirable to find a last email in a chain of responsive emails so that a minimum number of emails can be reviewed without missing any information.

US 2004/0064737 discloses hash-based systems and methods for detecting and preventing transmission of polymorphic network worms and viruses.

US 2008/0059590 discloses a method to filter electronic messages in a message processing system

### SUMMARY

Aspects of the invention are defined in the appended claims.

Systems and methods for detecting email content containment are disclosed. In one embodiment, a method comprises generating a first set of hash values corresponding to a first email document, wherein the first set includes a respective hash value corresponding to each of a plurality of character sequences of the first email document. The method further comprises generating a second set of hash values corresponding to a second email document, wherein the second set include a respective hash value corresponding to each of a plurality of character sequences of the second email document. The method finally comprises determining whether the first set of hash values is a subset of the second set of hash values.

The method further comprises generating a first bloom filter representing the first set of hash values corresponding to the first email document, generating a second bloom filter representing the second set of hash values corresponding to the second email document, and comparing the first bloom filter with the second bloom filter. The first and second bloom filters are compared by performing a bitwise OR operation. In various embodiments, the method further comprises providing an indication of whether content of the first email document is contained within the second email document based on a result of the determining.

In some examples, one or more of the hash values of the first and second sets are generated using an MD5 or SHA-1 hashing algorithm.

### BRIEF DESCRIPTION OF THE DRAWINGS

Specific examples will now be described by reference to the accompanying drawings, in which:
FIG. 1 is a block diagram of a computer system including an email database and containment detection code;
FIG. 2 is a flowchart of one example of a method to detect content containment within email documents;
FIG. 3 depicts content of two example emails;
FIG. 4 depicts the two example emails with extraneous content removed;
FIG. 5 depicts an example of a hash;
FIG. 6 is a flowchart of one example of a method for comparing hash values using bloom-filtering techniques;
FIG. 7 depicts examples of bloom filters; and
FIG. 8 depicts an example bitwise OR comparison of bloom filters.

While the invention is susceptible to various modifications and alternative forms, specific embodiments thereof are shown by way of example in the drawings and will herein be described in detail.

### DETAILED DESCRIPTION

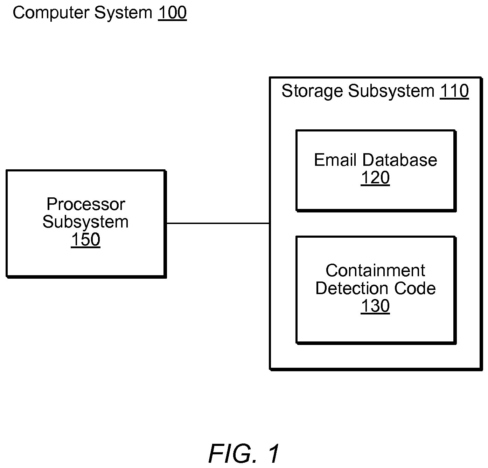

Turning now to FIG. 1, a block diagram of an example of a computer system 100 is shown. Computer system 100 includes a storage subsystem 110 coupled to a processor subsystem 150. Storage subsystem 110 is shown storing an email database 120 and containment detection code 130. Computer system 100 may be any of various types of devices, including, but not limited to, a personal computer system, desktop computer, laptop or notebook computer, mainframe computer system, handheld computer, workstation, network computer, a consumer device such as a mobile phone, pager, or personal data assistant (PDA). Computer system 100 may also be any type of networked peripheral device such as storage devices, switches, modems, routers, etc. Although a single computer system 100 is shown in Figure 1, system 100 may also be implemented as two or more computer systems operating together.

Processor subsystem 150 is representative of one or more processors capable of executing containment detection code 130. Various specific types of processors may be employed, such as, for example, an x86 processor, a Power PC processor, an IBM Cell processor, or an ARM processor.

Storage subsystem 110 is representative of various types of storage media, also referred to as "computer readable storage media." Storage subsystem 110 may be implemented using any suitable media type and/or storage architecture. For example, storage subsystem 110 may be implemented using storage media such as hard disk storage, floppy disk storage, removable disk storage, flash memory, semiconductor memory such as random access memory or read only memory, etc. It is noted that storage subsystem 110 may be implemented at a single location or may be distributed (e.g., in a SAN configuration).

Email database 120 contains a plurality of email messages, each referred to herein as an email document, associated with one or more email system users. It is noted that various email documents within email database 120 may be duplicates of one another or may contain substantially similar content to that of other emails in the database (e.g., an initial email and a corresponding response email containing the initial email).

As will be described in further detail below, containment detection code 130 includes instructions executable by processor subsystem 150 to identify whether content of one email document in database 120 is contained (or potentially contained) within another email document. In various examples, email documents identified by containment detection code 130 as potentially being contained or containing the content of other emails may be reported to a user (e.g., a last email in a chain of responsive emails). In some examples, identified emails may be further evaluated. For example, upon identification, email documents may be analyzed or compared by additional code to determine and/or verify the extent to which content of one email is contained within another, and/or to identify chains of emails. Execution of containment detection code 130 may allow efficient filtering of email documents that do not contain content within other email documents.

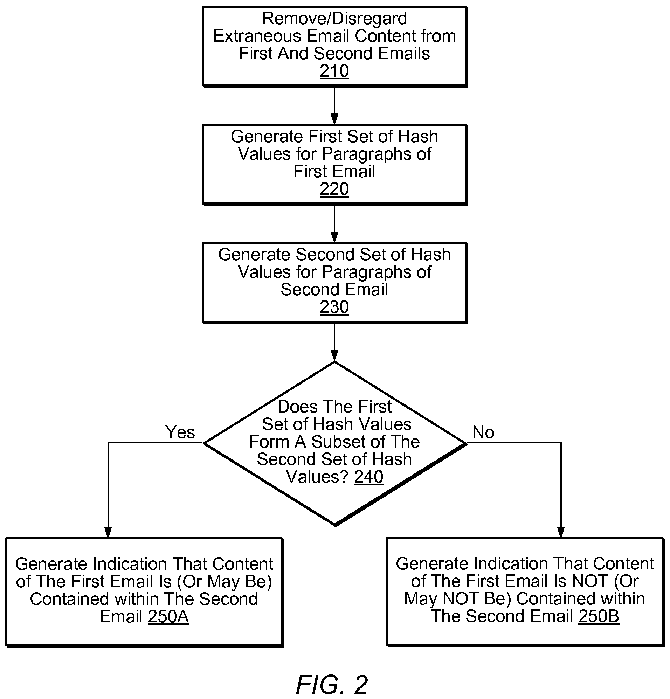

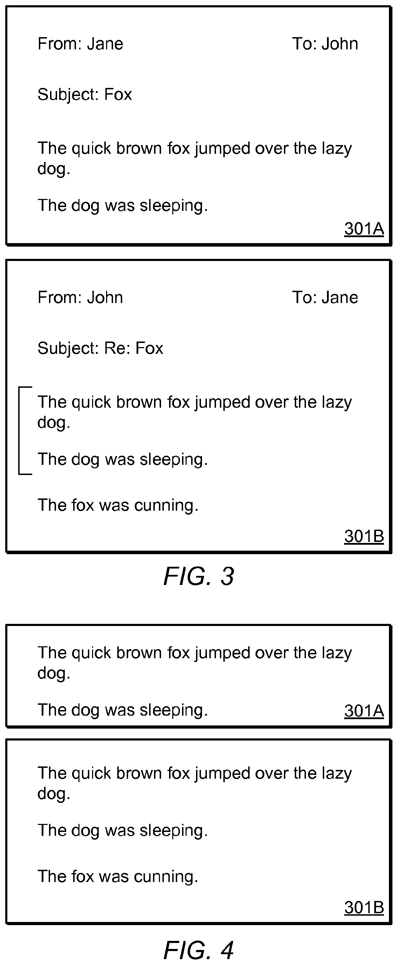

FIG. 2 is a flow diagram illustrating operations that may be carried out in accordance with execution of one example of containment detection code 130. Operations illustrated in FIG. 2 will be discussed in conjunction with an example situation illustrated by FIG. 3, which shows content of two possible email documents 301A and 301B. As shown, email document 301B is a response to email document 301A. In this example, it is noted that the email documents 301 A and 301B contain different email headers (e.g., the From, To, and Subject portions). It is also noted that an ending portion of email document 301B contains the sequence "The fox was cunning", which is not included in email document 301A.

In step 210, extraneous email content in an email document being processed is removed or disregarded. This extraneous content may include common, reoccurring phrases found in typical email documents such as, "From [Name], To [Name], Subject

[TITLE], On [DATE], at [TIME], [NAME] wrote:", "Begin forwarded message:", "-Original Message-----", etc. An example of a result from this step is depicted in FIG. 4, where the headers have been removed from email documents 301A and 301B. In various examples, the extraneous email content removed/disregarded from each email document during step 210 may be predetermined or pre-selected words or phrases (e.g., phrases generally common to email documents). In other examples, the extraneous email content that is removed/disregarded may be controlled or specified by input from a user. It is noted that in some examples step 210 may be omitted.

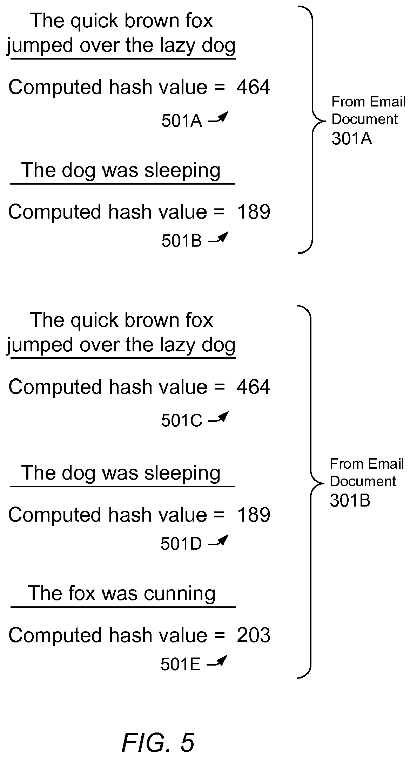

A first set of hash values is then generated, in step 220, for each paragraph in the first email document being processed, and a second set of hash values is generated, in step 230, for each paragraph in the second email document being processed. FIG. 5 illustrates such an example in which the hash values 501A-E are generated for the paragraphs "The quick brown fox jumped over the lazy dog", "The dog was sleeping", and "The fox was cunning". In this particular example, the alphabetic positions of each character in a paragraph are summed to generate each hash value. For example, the character "T" is the 20^{th} letter in the alphabet and the character "h" is the 8^{th} letter. Thus, a hash value of "464" is generated based on the sum of the alphabetic positions of the characters in the paragraph "The quick brown fox jumped over the lazy dog." The hash values "189" and "203" are similarly calculated based on the respective paragraphs "The dog was sleeping" and "The fox was cunning".

It is noted that any of a variety of other hash functions may be used to compute the hash value for a particular paragraph. Generally speaking, a "hash function" is any function that has a mapping of an input to a number (i.e., hash value). Thus, in various examples, specific hashing algorithms such as an MD5 hash, a SHA-1 hash, etc may be used. In the illustrated example, the input to the hash function may include the characters forming the paragraph or values representing the characters such as the ASCII ordinal values of the characters or the alphabetic character positions of the characters within each paragraph. Characters such as punctuation symbols, and/or numbers may or may not be included as input to the hash function, depending upon the selected implementation.

It is also noted that in some examples, multiple hash values may be generated for each paragraph using different hash functions. In addition, it is noted that in some alternative examples, hash values may be computed for character sequences other than paragraphs, such as, for example, sentences, portions of paragraphs, or any other variations for grouping characters.

In step 240, the first set of hash values generated in step 220 and the second set of hash values generated in step 230 are compared to determine whether the first set of hash values forms a subset of the second set of hash values. If the first set forms a subset of the second set, containment detection code 130 may provide an indication in step 250A that content of the first email is contained (or is possibly contained) within the second email. Conversely, if the first set is not a subset of the second set, containment detection code 130 may provide an indication in step 250B that the content of the first email is not contained (or possibly not contained) within the content of the second email. As shown in FIG. 5, the hash values "464" and "189" are generated from the respective paragraphs "The quick brown fox jumped over the lazy dog" and "The dog was sleeping" in email document 301A. Because these paragraphs of email document 301A are also contained within the content of email documents 301B, the hash values "464" and "189" are also generated for email document 301B. On the other hand, "The fox was cunning" is only contained within the email document 301B, and thus, the hash value "203" is only generated for email document 301B. Since the set of hash values "464" and "189" corresponding to email document 301A forms a smaller subset of the set of hash values "464", "189" and "203" corresponding to email document 301B, containment detection code 130 may provide an indication that the content of email document 301A is contained within email document 301B. As used herein, the first set of hash values generated for the first email document forms a smaller subset of the second email document if the second set includes each hash value included in the first set as well as additional hash values generated from paragraphs not contained in the first email document. In some embodiments, containment detection code 130 may also provide an indication of content containment in step 250A if the first set is the same as the second set (i.e., the sets include the same hash values).

By iteratively comparing different pairs of email documents, chains of responsive emails can be identified by determining emails that have content contained within other emails. When it is determined that one email contains the content of all others in the chain, it may be inferred that this email is a last in the chain. For example, in FIG. 5, email documents 301A and 301 B are in the same chain of responsive emails, and email document 301B is the last email. In some examples, containment detection code 130 may be configured to determine that a particular email contains the content of several others, and to provide an indication that the particular email may be the last in a chain.

It is noted that multiple unrelated emails may, occasionally, contain content that results in a false indication that the content one email document is contained (or potentially) contained within another (e.g., commonly recurring paragraphs). Thus, in various embodiments, during step 240, containment detection code 130 may be programmable to disregard certain hash values corresponding to content that appears in multiple unrelated emails.

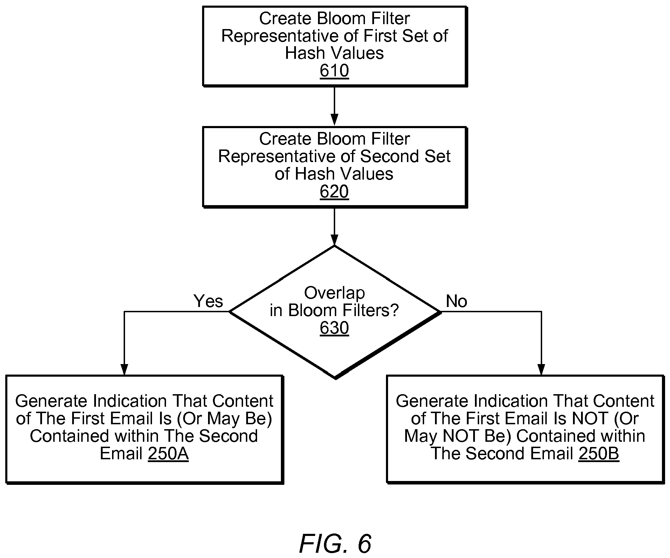

FIG. 6 is a flow diagram illustrating one particular implementation of step 240 for determining whether one set of hash values forms a smaller subset of another set. Accordingly, the following actions may be performed in conjunction with the techniques described above.

In the step 610, the first set of hash values generated in step 220 are reflected in a bloom filter corresponding to the first email document. Generally speaking, a "bloom filter" is a data structure in the form of a bit vector that represents a set of elements and is used to test if an element is a member of the set. Initially, an empty bloom filter may be characterized as a bit array of zeros. As elements are added to the bloom filter, corresponding, representative bits may be set.

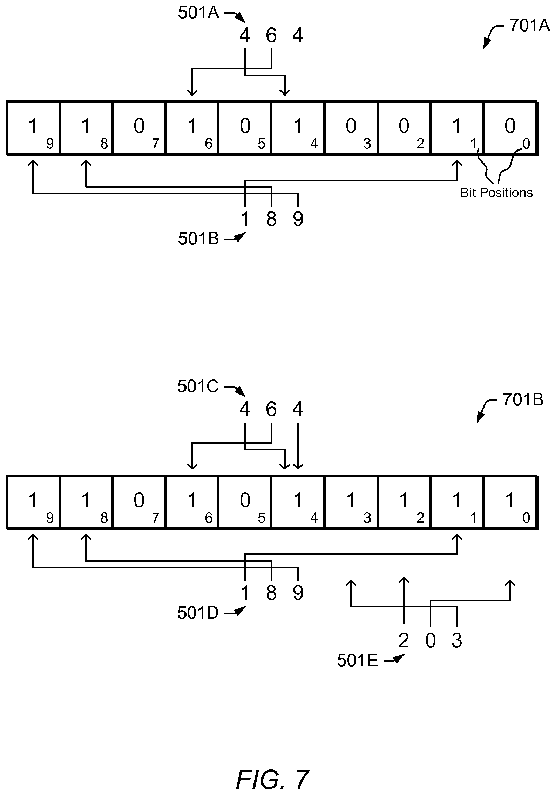

Thus, as illustrated in FIG. 7, the computed hash values 501A of "464" and 501B of "189" corresponding to the paragraphs from email document 301A are reflected in bloom filter 701A by setting selected bits. In particular, for the specific bloom-filtering algorithm illustrated in this example, bit positions 4 and 6 of bloom filter 601A are set based on the digits forming the computed hash value "464", and bits corresponding to positions 1, 8, and 9 are similarly set for hash value "189". In step 620, as shown, the computed hash values generated in step 230, corresponding to the paragraphs from the second email document 301B, are reflected in bloom filter 701B by similarly setting selected bits.

It is noted that any variety of other bloom-filtering algorithms may be employed in other examples. For example, the size of the vector (i.e. number of bits) forming the bloom filter data structure may be significantly larger than that illustrated in FIG. 7, and a given hash value may be represented in the bloom filter by setting other specific bit positions, as dictated by the algorithm.

In step 630, the bloom filters generated in steps 610 and 620 are compared to determine an extent of overlap. As shown in FIG. 6, the computed hash values "464" and "189" are represented in both bloom filters 701A and 701B, and thus, bits at positions 1, 4, 6, 8 and 9 in bloom filters 701A and 701B are correspondingly set. On the other hand, hash value "203" is only represented in bloom filter 701B, and thus, bits at positions 2, 0, and 3 are not correspondingly set in bloom filter 701A.

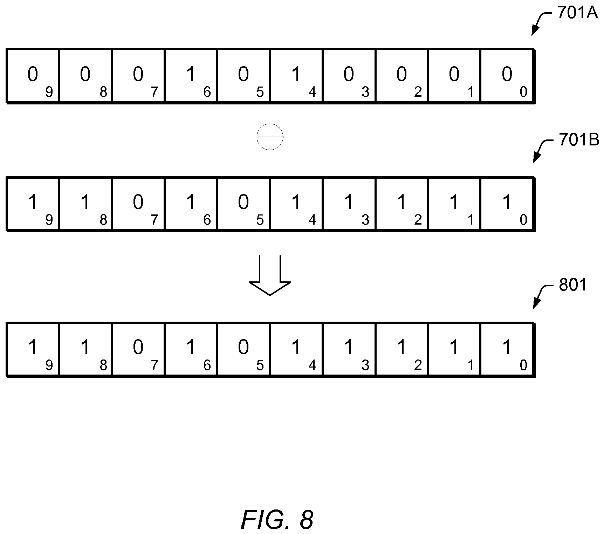

In one particular example depicted in FIG. 8, a bitwise OR may be performed to compare the bloom filters of two email documents. In this example, bit vector 801 is generated from the bitwise OR between the bit vectors of bloom filters 701A and 701B, and is subsequently compared with each of the bloom filters 701A and 701B. If the resultant bit vector 801 of the bitwise OR matches either of the input bloom filters 701A or 701B, containment detection code 130 may provide an indication that the content of one email is contained (or potentially contained) within the content of the other email in step 250A. Conversely, if the resultant bit vector 801 of the bitwise operation does not match either of bloom filters 701A and 701B, containment detection code 130 may provide an indication that the content of either email is not contained (or possibly not contained) within the other in step 250B. In the particular example illustrated by FIG.8, it is noted that bit vector 801 does match bloom filter 701B, and thus, containment detection code 130 provides an indication that the content of email document 301A is contained within the content of email document 301B.

Accordingly, viewed from one aspect, there have been described systems and methods for detecting email content containment are disclosed. A method comprises generating a first set of hash values corresponding to a first email document, wherein the first set includes a respective hash value corresponding to each of a plurality of character sequences of the first email document. The method further comprises generating a second set of hash values corresponding to a second email document, wherein the second set include a respective hash value corresponding to each of a plurality of character sequences of the second email document, and determining whether the first set of hash values is a subset of the second set of hash values.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise.

## Claims

1. A method, comprising:
receiving an input from a user, wherein the user identifies content common to a plurality of email documents and specifies that the common content is to be disregarded;
generating a first set of hash values corresponding to a first email document, wherein the first set includes a respective hash value corresponding to each of a plurality of character sequences of the first email document, and wherein the generating of the first set of hash values disregards any of the common content present in the first email document;
generating a first bloom filter representing the first set of hash values corresponding to the first email document, wherein generating the first bloom filter includes setting one or more bits corresponding to and dependent on each hash value in the first set of hash values;
generating a second set of hash values corresponding to a second email document, wherein the second set includes a respective hash value corresponding to each of a plurality of character sequences of the second email document, and wherein the generating of the second set of hash values disregards any of the common content present in the second email document;
generating a second bloom filter representing the second set of hash values corresponding to the second email document, wherein generating the second bloom filter includes setting one or more bits corresponding to and dependent on each hash value in the second set of hash values; and
determining whether the first set of hash values forms a smaller subset of the second set of hash values, by performing a bitwise OR operation on the first and second bloom filters.

2. The method of claim 1, wherein each of the plurality of character sequences of the first email document is a respective paragraph of the first email document, and wherein each of the plurality of character sequences of the second email document is a respective paragraph of the second email document.

3. The method of any preceding claim, further comprising providing an indication of whether content of the first email document is contained within the second email document based on a result of said determining.

4. A computer-readable memory medium storing program instructions that are computer-executable to:
receive an input from a user, wherein the user identifies content common to a plurality of email documents and specifies that the common content is to be disregarded;
generate a first set of hash values corresponding to a first email document, wherein the first set includes a respective hash value corresponding to each of a plurality of character sequences of the first email document, and wherein generating the first set of hash values disregards any of the common content present in the first email document;
generate a first bloom filter representing the first set of hash values corresponding to the first email document, wherein generating the first bloom filter includes setting one or more bits corresponding to and dependent on each hash value in the first set of hash values;
generate a second set of hash values corresponding to a second email document, wherein the second set includes a respective hash value corresponding to each of a plurality of character sequences of the second email document, and wherein generating the second set of hash values disregards any of the common content present in the second email document;
generate a second bloom filter representing the second set of hash values corresponding to the second email document, wherein generating the second bloom filter includes setting one or more bits corresponding to and dependent on each hash value in the second set of hash values; and
determine whether the first set of hash values forms a smaller subset of the second set of hash values, by performing a bitwise OR operation on the first and second bloom filters.

5. The computer-readable memory medium of claim 4, wherein each of the plurality of character sequences of the first email document is a respective paragraph of the first email document, and wherein each of the plurality of character sequences of the second email document is a respective paragraph of the second email document.

6. The computer-readable memory medium of claim 4 or 5, wherein the program instructions are further computer-executable to provide an indication of whether content of the first email document is contained within the second email document based on comparing the first and second bloom filters.

7. The computer-readable memory medium of any of claims 4 to 6, wherein the program instructions are further computer-executable to disregard predetermined content of the first and second email documents.

8. The computer-readable memory medium of claim 7, wherein the predetermined content includes email header information.

9. A system (100), comprising:
one or more processors (150); and
memory (110) storing program instructions that are computer-executable by the one or more processors to:
receive an input from a user, wherein the user identifies content common to a plurality of email documents and specifies that the common content is to be disregarded;
generate a first set of hash values corresponding to a first email document, wherein the first set includes a respective hash value corresponding to each of a plurality of character sequences of the first email document, and wherein generating the first set of hash values disregards any of the common content present in the first email document;
generate a first bloom filter representing the first set of hash values corresponding to the first email document, wherein generating the first bloom filter includes setting one or more bits corresponding to and dependent on each hash value in the first set of hash values;
generate a second set of hash values corresponding to a second email document, wherein the second set includes a respective hash value corresponding to each of a plurality of character sequences of the second email document, and wherein generating the second set of hash values disregards any of the common content present in the second email document;
generate a second bloom filter representing the second set of hash values corresponding to the second email document, wherein generating the second bloom filter includes setting one or more bits corresponding to and dependent on each hash value in the second set of hash values; and
determine whether the first set of hash values forms a smaller subset of the second set of hash values, by performing a bitwise OR operation on the first and second bloom filters.

10. The system of claim 9, wherein each of the plurality of character sequences of the first email document is a respective paragraph of the first email document, and wherein each of the plurality of character sequences of the second email document is a respective paragraph of the second email document.

11. The system of any of claims9 to 10, wherein the program instructions are further executable to disregard one or more hash values in the first or second sets when determining whether the first set of hash values forms a smaller subset of the second set of hash values.

12. The system of any of claims 9 to 11, wherein the program instructions are further executable to identify the second email document as response to the first email document based on determining that the first set of hash values forms a smaller subset of the second set of hash values.

## Patentansprüche

1. Verfahren, das Folgendes umfasst:
Empfangen einer Eingabe von einem Benutzer, wobei der Benutzer einen Inhalt identifiziert, der einer Vielzahl von E-Mail-Dokumenten gemeinsam ist, und spezifiziert, dass der gemeinsame Inhalt zu ignorieren ist;
Erzeugen eines ersten Satzes von Hashwerten, die einem ersten E-Mail-Dokument entsprechen, wobei der erste Satz einen jeweiligen Hashwert beinhaltet, der jeder einer Vielzahl von Zeichenfolgen des ersten E-Mail-Dokuments entspricht, und wobei das Erzeugen des ersten Satzes von Hashwerten alles des gemeinsamen Inhalts, der im ersten E-Mail-Dokument vorhanden ist, ignoriert;
Erzeugen eines ersten Bloomfilters, der den ersten Satz von Hashwerten, die dem ersten E-Mail-Dokument entsprechen, repräsentiert, wobei das Erzeugen des ersten Bloomfilters das Einstellen von einem oder mehreren Bits, die jedem Hashwert im ersten Satz von Hashwerten entsprechen und von diesem abhängig sind, beinhaltet;
Erzeugen eines zweiten Satzes von Hashwerten, die einem zweiten E-Mail-Dokument entsprechen, wobei der zweite Satz einen jeweiligen Hashwert beinhaltet, der jeder einer Vielzahl von Zeichenfolgen des ersten E-Mail-Dokuments entspricht, und wobei das Erzeugen des zweiten Satzes von Hashwerten alles des gemeinsamen Inhalts, der im zweiten E-Mail-Dokument vorhanden ist, ignoriert;
Erzeugen eines zweiten Bloomfilters, der den zweiten Satz von Hashwerten, die dem zweiten E-Mail-Dokument entsprechen, repräsentiert, wobei das Erzeugen des zweiten Bloomfilters das Einstellen von einem oder mehreren Bits, die jedem Hashwert im zweiten Satz von Hashwerten entsprechen und von diesem abhängig sind, beinhaltet; und
Bestimmen durch Durchführen einer bitweisen OR-Operation am ersten und am zweiten Bloomfilter, ob der erste Satz von Hashwerten einen kleineren Untersatz des zweiten Satzes von Hashwerten bildet.

2. Verfahren nach Anspruch 1, wobei jede der Vielzahl von Zeichenfolgen des ersten E-Mail-Dokuments ein jeweiliger Absatz des ersten E-Mail-Dokuments ist und wobei jede der Vielzahl von Zeichenfolgen des zweiten E-Mail-Dokuments ein jeweiliger Absatz des zweiten E-Mail-Dokuments ist.

3. Verfahren nach einem der vorhergehenden Ansprüche, das ferner auf Basis eines Ergebnisses des Bestimmens das Bereitstellen einer Anzeige, ob ein Inhalt des ersten E-Mail-Dokuments im zweiten E-Mail-Dokument enthalten ist, umfasst.

4. Computerlesbares Speichermedium, auf dem Programmanweisungen gespeichert sind, die zu Folgendem computerausführbar sind:
Empfangen einer Eingabe von einem Benutzer, wobei der Benutzer einen Inhalt identifiziert, der einer Vielzahl von E-Mail-Dokumenten gemeinsam ist, und spezifiziert, dass der gemeinsame Inhalt zu ignorieren ist;
Erzeugen eines ersten Satzes von Hashwerten, die einem ersten E-Mail-Dokument entsprechen, wobei der erste Satz einen jeweiligen Hashwert beinhaltet, der jeder einer Vielzahl von Zeichenfolgen des ersten E-Mail-Dokuments entspricht, und wobei das Erzeugen des ersten Satzes von Hashwerten alles des gemeinsamen Inhalts, der im ersten E-Mail-Dokument vorhanden ist, ignoriert;
Erzeugen eines ersten Bloomfilters, der den ersten Satz von Hashwerten, die dem ersten E-Mail-Dokument entsprechen, repräsentiert, wobei das Erzeugen des ersten Bloomfilters das Einstellen von einem oder mehreren Bits, die jedem Hashwert im ersten Satz von Hashwerten entsprechen und von diesem abhängig sind, beinhaltet;
Erzeugen eines zweiten Satzes von Hashwerten, die einem zweiten E-Mail-Dokument entsprechen, wobei der zweite Satz einen jeweiligen Hashwert beinhaltet, der jeder einer Vielzahl von Zeichenfolgen des zweiten E-Mail-Dokuments entspricht, und wobei das Erzeugen des zweiten Satzes von Hashwerten alles des gemeinsamen Inhalts, der im zweiten E-Mail-Dokument vorhanden ist, ignoriert;
Erzeugen eines zweiten Bloomfilters, der den zweiten Satz von Hashwerten, die dem zweiten E-Mail-Dokument entsprechen, repräsentiert, wobei das Erzeugen des zweiten Bloomfilters das Einstellen von einem oder mehreren Bits, die jedem Hashwert im zweiten Satz von Hashwerten entsprechen und von diesem abhängig sind, beinhaltet; und
Bestimmen durch Durchführen einer bitweisen OR-Operation am ersten und am zweiten Bloomfilter, ob der erste Satz von Hashwerten einen kleineren Untersatz des zweiten Satzes von Hashwerten bildet.

5. Computerlesbares Speichermedium nach Anspruch 4, wobei jede der Vielzahl von Zeichenfolgen des ersten E-Mail-Dokuments ein jeweiliger Absatz des ersten E-Mail-Dokuments ist und wobei jede der Vielzahl von Zeichenfolgen des zweiten E-Mail-Dokuments ein jeweiliger Absatz des zweiten E-Mail-Dokuments ist.

6. Computerlesbares Speichermedium nach Anspruch 4 oder 5, wobei die Programmanweisungen ferner computerausführbar sind, um auf Basis des Vergleichens des ersten und des zweiten Bloomfilters eine Anzeige, ob ein Inhalt des ersten E-Mail-Dokuments im zweiten E-Mail-Dokument enthalten ist, bereitzustellen.

7. Computerlesbares Speichermedium nach einem der Ansprüche 4 bis 6, wobei die Programmanweisungen ferner computerausführbar sind, um einen vorbestimmten Inhalt des ersten und des zweiten E-Mail-Dokuments zu ignorieren.

8. Computerlesbares Speichermedium nach Anspruch 7, wobei der vorbestimmte Inhalt E-Mail-Headerinformationen beinhaltet.

9. System (100), das Folgendes umfasst:
einen oder mehrere Prozessoren (150) und
Speicher (110), auf dem Programmanweisungen gespeichert sind, die von dem einen oder den mehreren Prozessoren zu Folgendem computerausführbar sind:
Empfangen einer Eingabe von einem Benutzer, wobei der Benutzer einen Inhalt identifiziert, der einer Vielzahl von E-Mail-Dokumenten gemeinsam ist, und spezifiziert, dass der gemeinsame Inhalt zu ignorieren ist;
Erzeugen eines ersten Satzes von Hashwerten, die einem ersten E-Mail-Dokument entsprechen, wobei der erste Satz einen jeweiligen Hashwert beinhaltet, der jeder einer Vielzahl von Zeichenfolgen des ersten E-Mail-Dokuments entspricht, und wobei das Erzeugen des ersten Satzes von Hashwerten alles des gemeinsamen Inhalts, der im ersten E-Mail-Dokument vorhanden ist, ignoriert;
Erzeugen eines ersten Bloomfilters, der den ersten Satz von Hashwerten, die dem ersten E-Mail-Dokument entsprechen, repräsentiert, wobei das Erzeugen des ersten Bloomfilters das Einstellen von einem oder mehreren Bits, die jedem Hashwert im ersten Satz von Hashwerten entsprechen und von diesem abhängig sind, beinhaltet;
Erzeugen eines zweiten Satzes von Hashwerten, die einem zweiten E-Mail-Dokument entsprechen, wobei der zweite Satz einen jeweiligen Hashwert beinhaltet, der jeder einer Vielzahl von Zeichenfolgen des zweiten E-Mail-Dokuments entspricht, und wobei das Erzeugen des zweiten Satzes von Hashwerten alles des gemeinsamen Inhalts, der im zweiten E-Mail-Dokument vorhanden ist, ignoriert;
Erzeugen eines zweiten Bloomfilters, der den zweiten Satz von Hashwerten, die dem zweiten E-Mail-Dokument entsprechen, repräsentiert, wobei das Erzeugen des zweiten Bloomfilters das Einstellen von einem oder mehreren Bits, die jedem Hashwert im zweiten Satz von Hashwerten entsprechen und von diesem abhängig sind, beinhaltet; und
Bestimmen durch Durchführen einer bitweisen OR-Operation am ersten und am zweiten Bloomfilter, ob der erste Satz von Hashwerten einen kleineren Untersatz des zweiten Satzes von Hashwerten bildet.

10. System nach Anspruch 9, wobei jede der Vielzahl von Zeichenfolgen des ersten E-Mail-Dokuments ein jeweiliger Absatz des ersten E-Mail-Dokuments ist und wobei jede der Vielzahl von Zeichenfolgen des zweiten E-Mail-Dokuments ein jeweiliger Absatz des zweiten E-Mail-Dokuments ist.

11. System nach einem der Ansprüche 9 bis 10, wobei die Programmanweisungen ferner ausführbar sind, um einen oder mehrere Hashwerte im ersten oder im zweiten Satz zu ignorieren, wenn bestimmt wird, ob der erste Satz von Hashwerten einen kleineren Untersatz des zweiten Satzes von Hashwerten bildet.

12. System nach einem der Ansprüche 9 bis 11, wobei die Programmanweisungen ferner ausführbar sind, um auf Basis des Bestimmens, dass der erste Satz von Hashwerten einen kleineren Untersatz des zweiten Satzes von Hashwerten bildet, das zweite E-Mail-Dokument als Antwort auf das erste E-Mail-Dokument zu identifizieren.

## Revendications

1. Procédé, comprenant :
la réception d'une entrée depuis un utilisateur, dans lequel l'utilisateur identifie un contenu commun à une pluralité de documents de courrier électronique et spécifie que le contenu commun doit être ignoré ;
la génération d'un premier ensemble de valeurs de hachage correspondant à un premier document de courrier électronique, dans lequel le premier ensemble comporte une valeur de hachage respective correspondant à chacune d'une pluralité de séquences de caractères du premier document de courrier électronique, et dans lequel la génération du premier ensemble de valeurs de hachage ignore toute partie quelconque du contenu commun présent dans le premier document de courrier électronique ;
la génération d'un premier filtre de Bloom représentant le premier ensemble de valeurs de hachage correspondant au premier document de courrier électronique, dans lequel la génération du premier filtre de Bloom comporte la mise sur 1 d'un ou de plusieurs bits correspondant à et dépendant de chaque valeur de hachage dans le premier ensemble de valeurs de hachage ;
la génération d'un second ensemble de valeurs de hachage correspondant à un second document de courrier électronique, dans lequel le second ensemble comporte une valeur de hachage respective correspondant à chacune d'une pluralité de séquences de caractères du second document de courrier électronique, et dans lequel la génération du second ensemble de valeurs de hachage ignore toute partie quelconque du contenu commun présent dans le second document de courrier électronique ;
la génération d'un second filtre de Bloom représentant le second ensemble de valeurs de hachage correspondant au second document de courrier électronique, dans lequel la génération du second filtre de Bloom comporte la mise sur 1 d'un ou de plusieurs bits correspondant à et dépendant de chaque valeur de hachage dans le second ensemble de valeurs de hachage ; et
la détermination que le premier ensemble de valeurs de hachage forme ou non un sous-ensemble inférieur du second ensemble de valeurs de hachage, en exécutant une opération OU sur les bits sur les premier et second filtres de Bloom.

2. Procédé selon la revendication 1, dans lequel chacune de la pluralité de séquences de caractères du premier document de courrier électronique est un paragraphe respectif du premier document de courrier électronique, et dans lequel chacune de la pluralité de séquences de caractères du second document de courrier électronique est un paragraphe respectif du second document de courrier électronique.

3. Procédé selon l'une quelconque des revendications précédentes, comprenant en outre la fourniture d'une indication que le contenu du premier document de courrier électronique est contenu ou non dans le second document de courrier électronique en fonction d'un résultat de ladite détermination.

4. Support de mémorisation lisible par ordinateur qui mémorise des instructions de programme exécutables par ordinateur pour :
recevoir une entrée depuis un utilisateur, dans lequel l'utilisateur identifie un contenu commun à une pluralité de documents de courrier électronique et spécifie que le contenu commun doit être ignoré ;
générer un premier ensemble de valeurs de hachage correspondant à un premier document de courrier électronique, dans lequel le premier ensemble comporte une valeur de hachage respective correspondant à chacune d'une pluralité de séquences de caractères du premier document de courrier électronique, et dans lequel la génération du premier ensemble de valeurs de hachage ignore toute partie quelconque du contenu commun présent dans le premier document de courrier électronique ;
générer un premier filtre de Bloom représentant le premier ensemble de valeurs de hachage correspondant au premier document de courrier électronique, dans lequel la génération du premier filtre de Bloom comporte la mise sur 1 d'un ou de plusieurs bits correspondant à et dépendant de chaque valeur de hachage dans le premier ensemble de valeurs de hachage ;
générer un second ensemble de valeurs de hachage correspondant à un second document de courrier électronique, dans lequel le second ensemble comporte une valeur de hachage respective correspondant à chacune d'une pluralité de séquences de caractères du second document de courrier électronique, et dans lequel la génération du second ensemble de valeurs de hachage ignore toute partie quelconque du contenu commun présent dans le second document de courrier électronique ;
générer un second filtre de Bloom représentant le second ensemble de valeurs de hachage correspondant au second document de courrier électronique, dans lequel la génération du second filtre de Bloom comporte la mise sur 1 d'un ou de plusieurs bits correspondant à et dépendant de chaque valeur de hachage dans le second ensemble de valeurs de hachage ; et
déterminer que le premier ensemble de valeurs de hachage forme ou non un sous-ensemble inférieur du second ensemble de valeurs de hachage, en exécutant une opération OU sur les bits sur les premier et second filtres de Bloom.

5. Support de mémorisation lisible par ordinateur selon la revendication 4, dans lequel chacune de la pluralité de séquences de caractères du premier document de courrier électronique est un paragraphe respectif du premier document de courrier électronique, et dans lequel chacune de la pluralité de séquences de caractères du second document de courrier électronique est un paragraphe respectif du second document de courrier électronique.

6. Support de mémorisation lisible par ordinateur selon la revendication 4 ou 5, dans lequel les instructions de programme sont en outre exécutables par ordinateur pour fournir une indication qu'un contenu du premier document de courrier électronique est contenu ou non dans le second document de courrier électronique en fonction d'une comparaison des premier et second filtres de Bloom.

7. Support de mémorisation lisible par ordinateur selon l'une quelconque des revendications 4 à 6, dans lequel les instructions de programme sont en outre exécutables par ordinateur pour ignorer un contenu prédéterminé des premier et second documents de courrier électronique.

8. Support de mémorisation lisible par ordinateur selon la revendication 7, dans lequel le contenu prédéterminé comporte des informations d'en-tête de courrier électronique.

9. Système (100), comprenant :
un ou plusieurs processeurs (150) ; et
une mémoire (110) mémorisant des instructions de programme qui sont exécutables par ordinateur par les un ou plusieurs processeurs pour :
recevoir une entrée depuis un utilisateur, dans lequel l'utilisateur identifie un contenu commun à une pluralité de documents de courrier électronique et spécifie que le contenu commun doit être ignoré ;
générer un premier ensemble de valeurs de hachage correspondant à un premier document de courrier électronique, dans lequel le premier ensemble comporte une valeur de hachage respective correspondant à chacune d'une pluralité de séquences de caractères du premier document de courrier électronique, et dans lequel la génération du premier ensemble de valeurs de hachage ignore toute partie quelconque du contenu commun présent dans le premier document de courrier électronique ;
générer un premier filtre de Bloom représentant le premier ensemble de valeurs de hachage correspondant au premier document de courrier électronique, dans lequel la génération du premier filtre de Bloom comporte la mise sur 1 d'un ou de plusieurs bits correspondant à et dépendant de chaque valeur de hachage dans le premier ensemble de valeurs de hachage ;
générer un second ensemble de valeurs de hachage correspondant à un second document de courrier électronique, dans lequel le second ensemble comporte une valeur de hachage respective correspondant à chacune d'une pluralité de séquences de caractères du second document de courrier électronique, et dans lequel la génération du second ensemble de valeurs de hachage ignore toute partie quelconque du contenu commun présent dans le second document de courrier électronique ;
générer un second filtre de Bloom représentant le second ensemble de valeurs de hachage correspondant au second document de courrier électronique, dans lequel la génération du second filtre de Bloom comporte la mise sur 1 d'un ou de plusieurs bits correspondant à et dépendant de chaque valeur de hachage dans le second ensemble de valeurs de hachage ; et
déterminer que le premier ensemble de valeurs de hachage forme ou non un sous-ensemble inférieur du second ensemble de valeurs de hachage, en exécutant une opération OU sur les bits sur les premier et second filtres de Bloom.

10. Système selon la revendication 9, dans lequel chacune de la pluralité de séquences de caractères du premier document de courrier électronique est un paragraphe respectif du premier document de courrier électronique, et dans lequel chacune de la pluralité de séquences de caractères du second document de courrier électronique est un paragraphe respectif du second document de courrier électronique.

11. Système selon l'une quelconque des revendications 9 à 10, dans lequel les instructions de programme sont en outre exécutables pour ignorer une ou plusieurs valeurs de hachage dans le premier ou second ensemble lors de la détermination que le premier ensemble de valeurs de hachage forme ou non un sous-ensemble inférieur du second ensemble de valeurs de hachage.

12. Système selon l'une quelconque des revendications 9 à 11, dans lequel les instructions de programme sont en outre exécutables pour identifier que le second document de courrier électronique est une réponse au premier document de courrier électronique quand il est déterminé que le premier ensemble de valeurs de hachage forme un sous-ensemble inférieur du second ensemble de valeurs de hachage.
